# EUROPEAN PATENT SPECIFICATION

(11) **EP 1 946 912 B1**
(45) Date of publication and mention of the grant of the patent: **07.08.2019**
(21) Application number: 08150385.6
(22) Date of filing: 17.01.2008
(51) Int. Cl.: B29C 70/30, B29C 70/54, B29C 70/22

(54) **Method for producing a manufactured article made of composite material, a manufactured article thus obtained and an edge strip**
Verfahren zur Herstellung eines Artikels aus Verbundmaterial, dadurch hergestellter Artikel und Randstreifen
Procédé pour la production d'un article fabriqué à partir d'un matériau composite, article ainsi obtenu et bande de bordure

(30) Priority: 18.01.2007 IT BO20070022
(43) Date of publication of application: 23.07.2008
(73) Proprietor: DELTA - TECH S.p.A., Altopascio (IT); Montanari, Italo, Collecchio (IT)
(72) Inventor: Montanari, Italo, Collecchio (IT); Nieri, Paolo, 55029 Lucca (IT)
(74) Representative: Bergadano, Mirko

(56) References cited:
- DE-A1-102004 054 345
- US-A- 3 968 958

## Description

The present invention relates to a method for producing a manufactured article made of composite material, a manufactured article thus obtained, and an edge strip.

The majority of the methods used to produce manufactured articles made of composite material do not allow well-defined edges to be obtained. For this reason, after moulding the manufactured articles often have to be edged and/or trimmed to obtain the desired shape and eliminate defects along the edges. These processes involve the use of expensive equipment and/or a considerable amount of labour.

Manufactured articles that have been edged and/or trimmed have edges consisting of exposed cut sections which, unless adequately protected using paint or other sealants, are exposed to any aggressive external agents, such as, for instance, water, saline solutions, etc.

Moreover, in many cases the trimmed edges are thin and sharp, representing a source of considerable risk when being handled or in case of accidental collisions. In that respect, it is important to emphasize that current regulations concerning the automobile and motorcycle sectors often require the use of components with rounded edges.

DE102004054345 discloses a reinforced textile composite loop, comprising a first semi-finished textile composite formed into a loop-shaped preform with a first curved region and a second region containing the ends of the folded first composite running parallel to each other.

US3968958 discloses a light-weight, corrosion-resistant, elongated spring structure formed from fiber-reinforced composite material

The purpose of the present invention is to provide a method for producing a manufactured article made of composite material, a manufactured article thus obtained and an edge strip, which overcome, at least in part, the drawbacks described above and are, at the same time, easy and cheap to implement.

According to the present invention a method for producing a manufactured article made of composite material, a manufactured article thus obtained and an edge strip are provided according to that set forth in the following independent claims and, preferably, in any one of the claims depending directly or indirectly on the independent claims.

Unless otherwise specifically stated, in this document the term prepreg refers to a material impregnated with at least a resin, in particular a thermosetting resin.

The present invention will now be described with reference to the attached drawings, illustrating some non-limiting embodiments thereof, in which:
- figure 1 is a schematic view of a cross-section of an edge strip according to the present invention;
- figure 2 is a schematic view of a section of a manufactured article made of composite material according to the present invention, arranged inside a mould;

- figure 3 is a schematic view of a step in the production of the edge strip in figure 1;
- figure 4 is a schematic view of a cross-section of an alternative embodiment of an edge strip according to the present invention;
- figure 5 is a schematic view of a section of a manufactured article made of composite material not according to the scope of the appended claims;
- figure 6 is a view from above of the edge strip in figure 1;
- figure 7 is a schematic view of a cross-section of another alternative embodiment of an edge strip according to the present invention;
- figure 8 is a schematic view of a step in the production of the edge strip in figure 7;
- figure 9 is a schematic view of a cross-section of another alternative embodiment of a manufactured article made of composite material according to the present invention;
- figure 10 is a view from above of the manufactured article in figure 2; and
- figure 11 is a schematic view of a cross-section of another alternative embodiment of a manufactured article made of composite material according to the present invention;

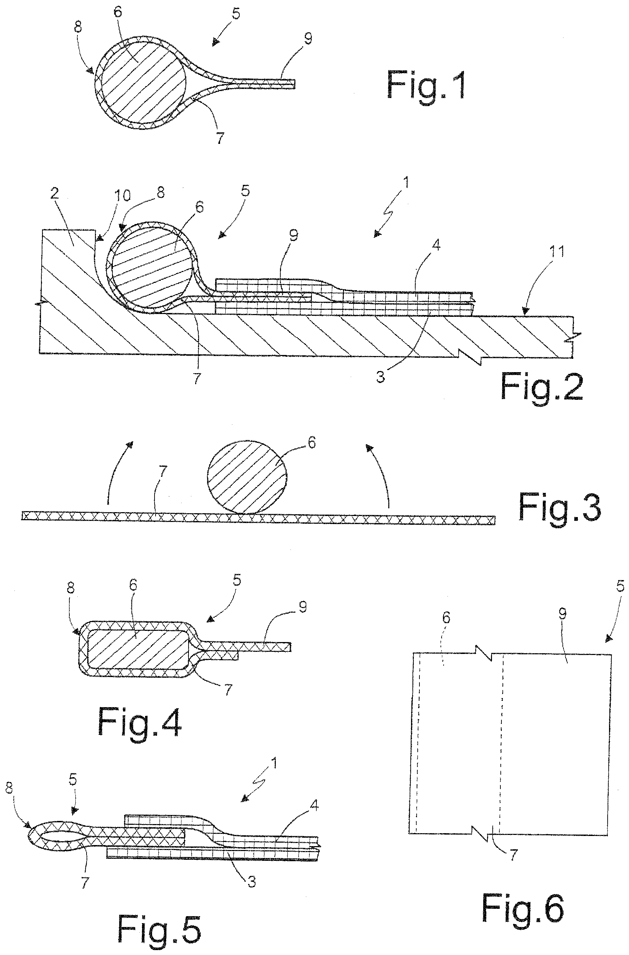

In figure 2, number 1 indicates an overall manufactured article (partially illustrated) made of composite material arranged inside a mould 2.

The manufactured article 1 comprises two overlapping sheets 3 and 4 and an edge strip 5, which, in turn, comprises a shim element 6 (in the embodiment illustrated in figures 1 and 6, a string with an essentially round cross-section) and a strip 7 folded round the shim element 6. In particular, the edge strip 5 has a longitudinal fold 8, which is essentially oriented towards the outside of the mould 2, and a longitudinal border 9 opposite the fold 8; the shim element 6 extends along essentially the entire fold 8 of the edge strip 5.

The border 9 consists, in the specific case, of two overlapping layers of the strip 7 and is arranged at least partially between the sheets 3 and 4.

The sheets 3 and 4 and the strip 7 comprise (specifically, are made of) a fibrous woven prepreg material, in particular a glass fibre prepreg. The shim element 6 comprises (specifically, is made of) a braided fibre string, in particular polyester fibre.

The mould 2 comprises an inside edge 10 which is rounded (concave) towards the inside of said mould 2 and along which the edge strip 5 is arranged so as to essentially come into contact with the fold 8.

As shown in figure 3, the edge strip 5 is obtained by folding the strip 7 round the shim element 6.

The manufactured article 1 is obtained by means of the following process. The sheet 3 is inserted into the mould 2 so as to come into contact with a bottom surface 11 of said mould 2 and so as to be spaced from the inside edge 10.

Next, the edge strip 5 is arranged inside the mould 2 along essentially the entire length of the inside edge 10 so as to come into contact with said inside edge 10 and so that at least part of the border 9 is arranged on the sheet 3.

With the edge strip 5 in place, the sheet 4 is inserted into the mould 2 so as to be spaced from the inside edge 10 above the sheet 3 so that at least part of the border 9 is arranged between the sheets 3 and 4.

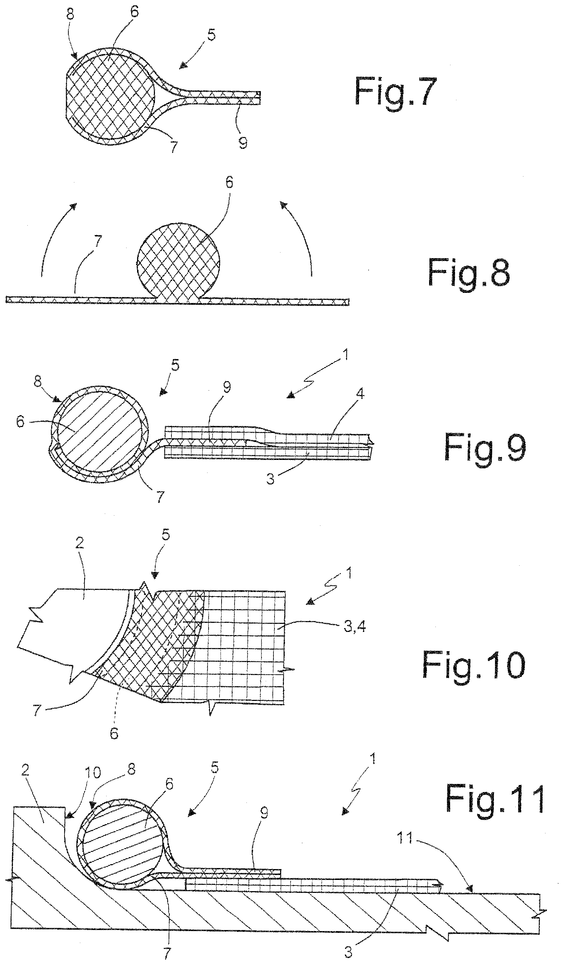

Figure 10 is a view from above of a portion of the mould 2, inside which the edge strip 5 and the sheets 3 and 4 have been arranged.

Next, the material inside the mould is covered with release film (not illustrated), and then with a cloth (not illustrated) for drawing the vacuum and sealed in plastic film (not illustrated) for vacuum bags. The mould 2 is then placed in an autoclave (not illustrated), at a pressure greater than atmospheric pressure and a temperature higher than ambient temperature in order to obtain at least the partial hardening of the materials of the strip 7 and of the sheets 3 and 4.

It is important to emphasize that said hardening of the materials of the strip 7 and of the sheets 3 and 4 can, alternatively, be obtained by means of any known method; for example, when the pressure is only that produced by the vacuum applied inside the plastic film (not illustrated) or when the pressure is applied by means of a matched mould (not illustrated), which may be rigid or flexible, or by means of a pressurized blister (not illustrated).

Figure 4 shows an alternative embodiment of the edge strip 5, which differs from that described previously mainly in that the shim element 6 has an essentially rectangular cross-section.

Figure 7 shows another alternative embodiment of the edge strip 5, which differs from that in figure 2 essentially in that the shim element 6 is connected directly to the strip 7 by means of a three-dimensional weave of the edge strip 5 with the simultaneous insertion of the shim element 6. Figure 8 is a schematic view of how the strip 7 is folded to obtain the edge strip in figure 7.

Figure 5 shows a manufactured article, not according to the scope of the appended claims, which differs from that in figure 2 essentially in that the edge strip 5 only comprises the strip 7 and does not have the shim element 6.

Figure 11 shows another alternative embodiment of the manufactured article 1, which differs from that in figure 2 essentially in that the manufactured article 1 does not comprise the sheet 2. In other words, the manufactured article 1 in figure 11 has a central portion comprising the sheet 3, an edge delimited at least partially by the fold 8 and an intermediate portion arranged between the edge and the central portion and comprising at least a part of the border 9 and a part of the first sheet 3 which overlap.

According to some embodiments the border 9 comprises two partially overlapping edges of the strip 7, as shown for example in figure 4. This solution reduces the already small break in the thickness along the joint between the edge strip 5 and the sheet 3 (and, possibly, the sheet 4).

Figure 9 shows another alternative embodiment of the manufactured article 1. The edge strip 5 shown in figure 9 has a longitudinal edge of the strip 7 which comes into contact with the shim element 6 and the border 9 consisting of a single layer of the strip 7.

According to some embodiments the thickness of the shim element 6 may be less than or more than the thickness of the strip 7. Preferably, however, the thickness of the shim element 6 is at least twice that of the strip 7; in this way the manufactured article 1 has relatively very rounded edges defined with relatively high precision.

According to some embodiments, the sheets 3 and 4 comprise conventional, multiaxial or unidirectional weave fabrics in glass fibre, carbon fibre, aramidic fibre or other suitable organic or inorganic fibres. In particular, according to some embodiments, the sheets 3 and 4 consist of an essentially identical material.

According to alternative embodiments the strip 7 comprises a conventional braided and/or stitched multiaxial and/or knitted and/or unwoven fibrous material; the fibres can be arranged in the longitudinal and/or transverse direction and/or with different angles with respect to the strip 7. Moreover, the strip 7 can consist of several identical or different layers. According to preferred embodiments, the strip 7 comprises fibres arranged so that the warp lies at an angle of approximately 45° in relation to the longitudinal direction of said strip 7. According to particular embodiments, the strip 7 is made of a material that is essentially identical to the material of the sheets 3 and 4.

According to alternative embodiments, regardless of its shape, the shim element 6 comprises braided fibres impregnated with resin or dry.

The invention according to the present invention has the following advantages compared to the prior art: significant reduction in the amount of work needed to finish the workpiece; stiffening and strengthening of the edge of the manufactured article 1, improving the structural characteristics of the manufactured article 1; no exposed cuts in the section of the laminate, so that the laminate is more resistant to the possibility of degradation and delamination caused by external agents; the edge of the component is rounded to prevent physical injury during handling and in case of accidental collisions.

Further characteristics of the present invention will become clear from the following description of a particular embodiment thereof, which is merely illustrative and non-limiting.

### Example

A manufactured article 1 has been manufactured using a glass fibre prepreg, having the following characteristics: areal weight of fibre: 380 g/m2; weave style: Twill 2x2; Delta-Tech DT120 epoxy resin; resin content: 38% in weight.

A 5 cm-wide strip 7 of prepreg was cut along the diagonal of the fabric (approx. 45°). This strip 7 was then folded over, lengthwise, and a braided polyester fibre string (shim element 6), with a diameter of approx. 4 mm, was inserted inside it so as to adhere to the fold 8. Due to the softness and stickiness of the prepreg, when the strip 7 was folded over and pressed gently with the string inside it, it stayed closed in a stable position so as to obtain an edge strip 5. The fibres arranged so as to lie at an angle of approx. 45° made the edge strip 5 very soft and easy to shape.

In a separate process, two rectangles of the same prepreg, measuring approx. 10 x 5 cm, were prepared to form two sheets 3 and 4.

The edge strip 5 and the sheets 3 and 4 were arranged inside a mould 2 as described previously in order to achieve an arrangement as illustrated in figure 2. The mould 2 had an inside edge 10 raised by 4 mm, joined to the base with a radius of 2 mm and suitable to delimit the contour of the finished manufactured article 1.

The mould 2 was covered with release film, and then with a cloth for drawing the vacuum and sealed in plastic film for vacuum bags.

The laminate was hardened in an autoclave with an air pressure of 4 bar and a temperature of 120°C for 90 minutes.

At the end of the hardening process, the laminate extracted from the mould had a well-defined edge, which was smooth and rounded on the side to which the pre-formed edge had been applied. On the smooth surface of the laminate, generated by coming directly into contact with the mould, there were no noticeable marks or other indications of discontinuity at the point in which the layers of the laminate and the inside of the pre-formed edge overlap.

## Claims

1. Method for producing a manufactured article (1) made of composite material; said method comprising:
a first insertion step to arrange at least a first sheet (3) of at least a first material inside a mould (2); a hardening step, during which the first material is hardened;
said method comprises: a positioning step to arrange at least an edge strip (5), having at least a longitudinal fold (8), inside the mould (2) along at least part of an inside edge (10) of the mould (2); the edge strip (5) and the first sheet (3) being arranged inside the mould (2) so that a longitudinal border (9) of the edge strip (5) opposite the fold (8) and the first sheet (3) at least partially overlap and the fold (8) is at least partially oriented towards the inside edge (10); the edge strip (5) comprises a strip (7) made of at least a second material folded longitudinally; the hardening step follows the positioning step and the first insertion step;
**characterized in that**
the edge strip (5) comprises a shim element (6), which comprises a braided fibre string and around which the strip (7) is folded.

2. Method according to claim 1, wherein the shim element (6) extends along essentially the entire fold (8) of the edge strip (5).

3. Method according to claim 1 or 2, wherein the shim element (6) has a thickness that is at least twice that of the strip (7).

4. Method according to one of the previous claims, wherein the longitudinal border (9) comprises at least a layer of said strip (7).

5. Method according to claim 4, wherein the longitudinal border (9) comprises at least two at least partially overlapping layers of the strip (7).

6. Method according to one of the previous claims, wherein the second material comprises a fibrous prepreg material.

7. Method according to claim 6, wherein the second material comprises a woven prepreg material.

8. Method according to one of the previous claims, wherein the second material comprises a fibrous woven material, wherein the fibres are arranged so that the warp lies at approx. 45° with respect to the longitudinal direction of the strip (7).

9. Method according to one of the previous claims, wherein the first material comprises a prepreg material.

10. Method according to one of the previous claims, and comprising a second insertion step to arrange a second sheet (4) of at least a third material inside the mould (2) so that the second sheet (4) at least partially overlaps the first sheet (3); the edge strip (5), the first and the second sheet (3, 4) are arranged inside the mould (2) so that the longitudinal border (9) of the edge strip (5) is arranged at least partially between the first and the second sheet (3, 4).

11. Method according to claim 10, wherein the first, the second and the third material are essentially identical to one another.

12. Manufactured article made of composite material obtained by means of a method according to one of the previous claims and having at least a central portion comprising at least a first sheet (3) of at least a first material, an edge delimited at least partially by a fold (8) of an edge strip (5) of at least a second material and an intermediate portion arranged between the edge and the central portion and comprising a longitudinal border (9) of the edge strip (5) and a part of the first sheet (3) which overlap; the first material comprising at least a prepreg material;
**characterized in that**
the edge strip (5) comprises a shim element (6), which comprises a braided fibre string and around which the strip (7) is folded.

13. Manufactured article according to claim 12, wherein the central portion comprises at least a second sheet (4) of at least a third material and overlapping the first sheet (3); the intermediate portion comprises the longitudinal border (9) of the edge strip (5) placed at least partially between the first and the second sheet (3, 4).

14. Edge strip for producing a manufactured article (1) according to claim 12 or 13, and comprising a strip (7) and a shim element (6); the strip (7) has a fold that extends longitudinally around the shim element (6) so as to form at least a free longitudinal border (9) opposite the fold (8); the strip (7) comprises a fibrous prepreg material;
**characterized in that**
the shim element (6) comprises abraided fibre string.

15. Edge strip according to claim 14, wherein the strip (7) consists of a fibrous prepreg material.

## Patentansprüche

1. Verfahren zur Herstellung eines Artikels (1) aus Verbundmaterial; das besagte Verfahren umfassend:
einen ersten Einführungsschritt zum Anordnen mindestens einer ersten Platte (3) aus mindestens einem ersten Material innerhalb einer Form (2); einen Härtungsschritt, bei dem das erste Material gehärtet wird;
das besagte Verfahren umfasst: einen Positionierschritt zum Anordnen mindestens eines Randstreifens (5) mit mindestens einem Längsfalz (8) innerhalb der Form (2) entlang mindestens eines Teils einer Innenkante (10) der Form (2); wobei der Randstreifen (5) und die erste Platte (3) innerhalb der Form (2) so angeordnet sind, dass sich ein Längsrand (9) des Randstreifens (5) gegenüber dem Falz (8) und der ersten Platte (3) zumindest teilweise überlappt und der Falz (8) zumindest teilweise zur Innenkante (10) ausgerichtet ist; der Randstreifen (5) einen Streifen (7) aus mindestens einem zweiten, in Längsrichtung gefalteten Material umfasst; der Härtungsschritt dem Positionierschritt und dem ersten Einführungsschritt folgt;
**dadurch gekennzeichnet, dass** der Randstreifen (5) ein Klemmstückelement (6) umfasst, welches einen geflochtenen Faserstrang umfasst und um welches der Streifen (7) gefaltet ist.

2. Verfahren nach Anspruch 1, wobei sich das Klemmstückelement (6) im Wesentlichen entlang des gesamten Falzes (8) des Randstreifens (5) erstreckt.

3. Verfahren nach Anspruch 1 oder 2, wobei das Klemmstückelement (6) eine Dicke aufweist, die mindestens doppelt so groß ist wie die des Streifens (7).

4. Verfahren nach einem der vorhergehenden Ansprüche, wobei der Längsrand (9) mindestens eine Schicht des Streifens (7) umfasst.

5. Verfahren nach Anspruch 4, wobei der Längsrand (9) mindestens zwei sich zumindest teilweise überlappende Schichten des Streifens (7) umfasst.

6. Verfahren nach einem der vorhergehenden Ansprüche, wobei das zweite Material ein faseriges vorimprägniertes Material umfasst.

7. Verfahren nach Anspruch 6, wobei das zweite Material ein gewebtes vorimprägniertes Material umfasst.

8. Verfahren nach einem der vorhergehenden Ansprüche, wobei das zweite Material ein faseriges gewebtes Material umfasst, wobei die Fasern so angeordnet sind, dass die Kette bei ca. 45° in Bezug auf die Längsrichtung des Streifens (7) liegt.

9. Verfahren nach einem der vorhergehenden Ansprüche, wobei das erste Material ein vorimprägniertes Material umfasst.

10. Verfahren nach einem der vorhergehenden Ansprüche, und umfassend einen zweiten Einführungsschritt zum Anordnen einer zweiten Platte (4) aus mindestens einem dritten Material innerhalb der Form (2), so dass die zweite Platte (4) mindestens teilweise die erste Platte (3) überlappt; der Randstreifen (5), die erste und die zweite Platte (3, 4) sind innerhalb der Form (2) so angeordnet, dass der Längsrand (9) des Randstreifens (5) mindestens teilweise zwischen der ersten und der zweiten Platte (3, 4) angeordnet ist.

11. Verfahren nach Anspruch 10, wobei das erste, das zweite und das dritte Material im Wesentlichen identisch sind.

12. Hergestellter Artikel aus Verbundwerkstoff, der nach einem Verfahren nach einem der vorstehenden Ansprüche hergestellt wird und mindestens einen Mittelabschnitt aufweist umfassend mindestens eine erste Platte (3) aus mindestens einem ersten Material, eine Kante, die mindestens teilweise durch einen Falz (8) eines Randstreifens (5) aus mindestens einem zweiten Material begrenzt ist, und einen Zwischenabschnitt, der zwischen der Kante und dem Mittelabschnitt angeordnet ist und umfassend einen Längsrand (9) des Randstreifens (5) und einen Teil der ersten Platte (3), welcher überlappt; wobei das erste Material mindestens ein vorimprägniertes Material umfasst;
**dadurch gekennzeichnet, dass** der Randstreifen (5) ein Klemmstückelement (6) umfasst, welches einen geflochtenen Faserstrang umfasst und um welches der Streifen (7) gefaltet ist.

13. Hergestellter Artikel nach Anspruch 12, wobei der mittlere Abschnitt mindestens eine zweite Platte (4) aus mindestens einem dritten Material umfasst und die erste Platte (3) überlappt; der Zwischenabschnitt den Längsrand (9) des Randstreifens (5) umfasst, der mindestens teilweise zwischen der ersten und der zweiten Platte (3, 4) angeordnet ist.

14. Randstreifen zur Herstellung eines hergestellten Artikels (1) nach Anspruch 12 oder 13, und umfassend einen Streifen (7) und ein Klemmstückelement (6); der Streifen (7) weist einen Falz auf, der sich in Längsrichtung um das Klemmstückelement (6) erstreckt, um mindestens einen freien Längsrand (9) gegenüber des Falzes (8) zu bilden; der Streifen (7) umfasst ein faseriges vorimprägniertes Material;
**dadurch gekennzeichnet, dass** das Klemmstückelement (6) einen geflochtenen Faserstrang umfasst.

15. Randstreifen nach Anspruch 14, wobei der Streifen (7) aus einem faserigen vorimprägnierten Material besteht.

## Revendications

1. Procédé de production d'un article manufacturé (1) en matériau composite ; ledit procédé comprenant :
une première étape d'insertion destinée à disposer au moins une première feuille (3) d'au moins un premier matériau à l'intérieur d'un moule (2) ; une étape de durcissement au cours de laquelle le premier matériau est durci ;
ledit procédé comprenant : une étape de positionnement destinée à disposer au moins une bande de bord (5), comportant au moins un pli longitudinal (8), à l'intérieur du moule (2) le long d'au moins une partie d'un bord intérieur (10) du moule (2) ; la bande de bord (5) et la première feuille (3) étant disposées à l'intérieur du moule (2) de sorte qu'une bordure longitudinale (9) de la bande de bord (5), opposée au pli (8) et à la première feuille (3) se chevauchent au moins partiellement et que le pli (8) soit au moins partiellement orienté vers le bord intérieur (10) ; la bande de bord (5) comprenant une bande (7) d'au moins un deuxième matériau plié longitudinalement ; l'étape de durcissement suivant l'étape de positionnement et la première étape d'insertion ;
**caractérisé en ce que**
la bande de bord (5) comprend un élément formant cale (6) qui comprend une chaîne de fibres tressées et autour duquel la bande (7) est pliée.

2. Procédé selon la revendication 1, dans lequel l'élément formant cale (6) s'étend sensiblement le long de tout le pli (8) de la bande de bord (5).

3. Procédé selon la revendication 1 ou 2, dans lequel l'élément formant cale (6) a une épaisseur au moins égale à deux fois celle de la bande (7).

4. Procédé selon l'une des revendications précédentes, dans lequel la bordure longitudinale (9) comprend au moins une couche de ladite bande (7).

5. Procédé selon la revendication 4, dans lequel la bordure longitudinale (9) comprend au moins deux couches de la bande (7) qui se chevauchent au moins partiellement.

6. Procédé selon l'une des revendications précédentes, dans lequel le deuxième matériau comprend un matériau préimprégné fibreux.

7. Procédé selon la revendication 6, dans lequel le deuxième matériau comprend un matériau préimprégné tissé.

8. Procédé selon l'une des revendications précédentes, dans lequel le deuxième matériau comprend un matériau tissé fibreux, dans lequel les fibres sont disposées de sorte que la chaîne se situe à environ 45° par rapport à la direction longitudinale de la bande (7).

9. Procédé selon l'une des revendications précédentes, dans lequel le premier matériau comprend un matériau préimprégné.

10. Procédé selon l'une des revendications précédentes, et comprenant une deuxième étape d'insertion destinée à disposer une deuxième feuille (4) d'au moins un troisième matériau à l'intérieur du moule (2) de manière que la deuxième feuille (4) chevauche au moins partiellement la première feuille (3) ; la bande de bord (5), la première et la deuxième feuille (3, 4) étant disposées à l'intérieur du moule (2) de sorte que la bordure longitudinale (9) de la bande de bord (5) soit disposée au moins partiellement entre la première et la deuxième feuille (3, 4).

11. Procédé selon la revendication 10, dans lequel le premier, le deuxième et le troisième matériau sont sensiblement identiques entre eux.

12. Article manufacturé en matériau composite obtenu par un procédé selon l'une des revendications précédentes et comportant au moins une partie centrale comprenant au moins une première feuille (3) d'au moins un premier matériau, un bord délimité au moins partiellement par un pli (8) d'une bande de bord (5) d'au moins un deuxième matériau et d'une partie intermédiaire disposée entre le bord et la partie centrale et comprenant une bordure longitudinale (9) de la bande de bord (5) et une partie de la première feuille (3) qui se chevauchent ; le premier matériau comprenant au moins un matériau préimprégné ;
**caractérisé en ce que** la bande de bord (5) comprend un élément formant cale (6) qui comprend une chaîne de fibres tressées et autour duquel la bande (7) est pliée.

13. Article manufacturé selon la revendication 12, dans lequel la partie centrale comprend au moins une deuxième feuille (4) d'au moins un troisième matériau et chevauchant la première feuille (3) ; la partie intermédiaire comprend la bordure longitudinale (9) de la bande de bord (5) placée au moins partiellement entre la première et la deuxième feuille (3, 4).

14. Bande de bord destinée à la production d'un article manufacturé (1) selon la revendication 12 ou 13, et comprenant une bande (7) et un élément formant cale (6) ; la bande (7) comportant un pli qui s'étend longitudinalement autour de l'élément formant cale (6) de manière à former au moins une bordure longitudinale libre (9) opposée au pli (8); la bande (7) comprenant un matériau préimprégné fibreux ;
**caractérisée en ce que**
l'élément formant cale (6) comprend une chaîne de fibres tressées.

15. Bande de bord selon la revendication 14, dans laquelle la bande (7) est constituée d'un matériau préimprégné fibreux.
